# EUROPÄISCHE PATENTSCHRIFT

(11) **EP 4 504 566 B1**
(45) Veröffentlichungstag und Bekanntmachung des Hinweises auf die Patenterteilung: **21.01.2026**
(21) Anmeldenummer: 23727792.6
(22) Anmeldetag: 10.05.2023
(51) Int. Cl.: B60R 22/343, B60R 22/34

(54) **GURTAUFROLLER MIT EINER ELEKTRISCH BETÄTIGBAREN BLOCKIEREINRICHTUNG**
SEATBELT RETRACTOR HAVING AN ELECTRICALLY ACTUATABLE BLOCKING DEVICE
ENROULEUR DE CEINTURE DE SÉCURITÉ AYANT UN DISPOSITIF DE BLOCAGE POUVANT ÊTRE ACTIONNÉ ÉLECTRIQUEMENT

(30) Priorität: 03.06.2022 DE 102022114162
(43) Veröffentlichungstag der Anmeldung: 12.02.2025
(73) Patentinhaber: Autoliv Development AB, 447 83 Vårgårda (SE)
(72) Erfinder: KUENZLER, Florian, 22880 Wedel (DE); RINGS, Philip, 22846 Norderstedt (DE); MALEKI, Anja, 21509 Glinde (DE)
(74) Vertreter: Müller Verweyen
(86) Internationale Anmeldenummer: PCT/EP2023/062363
(87) Internationale Veröffentlichungsnummer: WO 2023/232410

(56) Entgegenhaltungen:
- WO-A1-2012/081188
- GB-A- 2 398 824
- US-A- 5 441 304

## Beschreibung

Die vorliegende Erfindung betrifft einen Gurtaufroller mit einer elektrisch betätigbaren Blockiereinrichtung mit den Merkmalen des Oberbegriffs von Anspruch 1.

Eine gattungsgemäße elektrisch betätigbare Blockiereinrichtung ist z.B. aus der WO 2012/081188 A1 und aus der GB 2 398 824 A bekannt.

Derartige Blockiereinrichtungen dienen dazu, eine außenverzahnte Steuerscheibe, welche drehbar an einer Gurtwelle des Gurtaufrollers gelagert ist, durch Eingriff eines Blockierhebels gegenüber der Gurtwelle anzuhalten und dadurch eine Blockierklinke zu einer Einsteuerbewegung in eine fahrzeugfeste Verzahnung zu zwingen, wodurch wiederum die Gurtwelle in Auszugsrichtung blockiert wird.

Bei herkömmlichen mechanischen Blockiereinrichtungen ist eine träge Masse auf einer Aufstandsfläche gelagert, welche bei einem Überschreiten einer vorbestimmten Fahrzeugverzögerung ausgelenkt wird, dadurch den Blockierhebel auslenkt und zu einem Eingriff in die Verzahnung der Steuerscheibe zwingt. Derartige mechanische Blockiereinrichtungen werden auch als fahrzeugsensitive Sensoreinrichtungen bezeichnet. Ein Problem dieser mechanischen Blockiereinrichtungen ist, dass die träge Masse immer in einer definierten Ausrichtung auf der Aufstandsfläche zu der Fahrzeuglängsachse und der Fahrzeugquerachse unabhängig von der Einbaugeometrie des Gurtaufrollers ausgerichtet sein muss, damit die Gurtwelle nicht unbeabsichtigt blockiert wird. Damit muss der Gurtaufroller fahrzeugindividuell ausgelegt werden, indem die Ausrichtung der Aufstandsfläche und der darauf anliegenden Masse zu dem Gurtaufroller individuell so ausgelegt wird, dass sie unter Berücksichtigung der Einbaugeometrie des Gurtaufrollers im Fahrzeug der vorgegebenen Ausrichtung entspricht. Ferner besteht bei in den Vordersitzen integrierten Gurtaufrollern wie z.B. bei Cabriolets das Problem, dass die träge Masse bei einer Verstellung des Neigungswinkels der Rückenlehne bzw. beim Vorwärtsklappen der Rückenlehnen zu einem Einstieg auf die hinteren Sitze unbeabsichtigt auf der Aufstandsfläche ausgelenkt und dadurch der Blockierhebel unbeabsichtigt zu einer Einsteuerbewegung in die Außenverzahnung der Steuerscheibe gezwungen wird. Damit ist der Gurtaufroller in Auszugsrichtung blockiert und die Rückenlehne kann nicht weiter verschwenkt werden bzw. der Insasse kann sich nicht anschnallen. Um das zu vermeiden, müssen zusätzliche Abschaltmechaniken bzw. Ausgleichsmechaniken vorgesehen werden, die ihrerseits aber nur in diesen Fällen wirken dürfen, damit die Rückhaltung des Insassen im Unfall in jedem Fall gegeben ist. Durch diese zu lösenden Aufgaben wird eine solche mechanische Blockiereinrichtung mechanisch sehr komplex.

Bei einer elektrisch betätigbaren Blockiereinrichtung, wie sie z.B. aus der GB 2 398 824 A bekannt ist, wird die Bewegung des Blockierhebels hingegen elektrisch gesteuert, wodurch die bisher erforderliche träge Masse entfällt. Der Gurtaufroller kann dadurch unverändert in verschiedenen Einbaulagen im Fahrzeug und auch in Rückenlehnen montiert werden. Ferner kann die Blockierung der Gurtwelle durch ein elektrisches Signal ausgehend von einer Steuereinrichtung gesteuert werden. Das Signal kann dabei von einer Steuereinrichtung erzeugt werden, welche das Signal auch in Abhängigkeit von anderen Sensoreinrichtungen oder Steuerungssystemen erzeugen kann. So ist es z.B. denkbar, die Gurtwelle automatisch bei einer Aktivierung eines fahrdynamischen Assistenzsystems zu blockieren, welches z.B. in Abhängigkeit eines Signals einer optischen Sensoreinrichtung angesteuert wird. Damit wird auch die elektrische Blockiereinrichtung direkt oder indirekt in Abhängigkeit von dem Signal der optischen Sensoreinrichtung angesteuert. Ferner ist die elektrisch betätigbare Blockiereinrichtung in beliebigen Ausrichtungen und Anordnungen funktionsfähig, da sie nicht durch Trägheitskräfte betätigt wird und damit nicht in einer speziellen Ausrichtung zu der Fahrzeugfahrtrichtung ausgerichtet sein muss. Damit kann sie bevorzugt auch in Sitzen von wenigstens teilweise autonom fahrenden Fahrzeugen angeordnet werden, welche der Insasse zu einer verbesserten Kommunikation mit den anderen Insassen, zur Ausrichtung in einer Ruhestellung oder auch allgemein zur Nutzung der durch das autonome Fahren gewonnenen Freiheiten in erheblich größeren Verstellbereichen verstellen kann, als er dies bei Sitzen von konventionellen nicht autonom fahrenden Fahrzeugen konnte.

Ein Problem bei einem Gurtaufroller mit einer solchen elektrisch betätigbaren Blockiereinrichtung ist darin zu sehen, dass der Gurtaufroller zur Ansteuerung der Blockiereinrichtung eine oder mehrere elektrische Leitungen aufweist muss, welche mit einer externen Steuereinrichtung bzw. Stromversorgung kontaktiert werden müssen. Dies ist insbesondere deshalb problematisch, da die Herstellung der elektrischen Kontaktierung erst bei einer Montage des Gurtaufrollers im Fahrzeug erfolgen kann, bei der die Fahrzeughersteller auf eine möglichst einfach zu handhabende und fehlerfrei zu verwirklichende Kontaktierung besonderen Wert legen.

Aufgabe der Erfindung ist es, einen Gurtaufroller mit einer elektrisch betätigbaren Blockiereinrichtung bereitzustellen, welcher eine einfach zu handhabende elektrische Kontaktierung aufweisen soll.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass die Systemkappe und die Lagerkappe jeweils eine Teilaufnahme aufweisen, welche sich in den montierten Stellungen der Systemkappe und der Lagerkappe zu einer Aufnahme für ein Steckkontaktgehäuse ergänzen.

Der Vorteil der vorgeschlagenen Lösung ist darin zu sehen, dass die geschaffene Aufnahme eine einfache Führung zum Einschieben eines Steckkontaktgehäuse bei der Montage bildet. Alternativ kann in der Aufnahme des Gurtaufroller auch bereits ein Steckkontaktgehäuse gehaltert sein, welches mit den elektrischen Leitungen elektrisch verbunden ist und bei der Montage einfach mit einem Gegenkontakt zu kontaktieren ist. Dabei wird die Aufnahme durch jeweils eine an der Lagerkappe und an der Systemkappe Teilaufnahme gebildet, so dass die Aufnahme bei der Montage des Gurtaufrollers und dem Anordnen der Systemkappe an der Lagerkappe automatisch gebildet wird. Dabei ist es von besonderem Vorteil, dass hier mit der Lagerkappe und der Systemkappe zwei ohnehin vorgesehene Teile verwendet werden, so dass die Aufnahme konstruktiv sehr einfach und mit einem minimalen Mehraufwand und minimalen Mehrkosten verwirklicht ist. Ferner wird die Aufnahme bewusst durch eine Teilaufnahme an der Lagerkappe gebildet, an der auch die Halterung für die Blockiereinrichtung angeordnet ist, so dass die Aufnahme in einer unmittelbaren räumlichen Beziehung zu der in der Halterung gehalterten Blockiereinrichtung mit ihren zu kontaktierenden elektrischen Leitungen angeordnet ist.

Weiter wird vorgeschlagen, dass das Steckkontaktgehäuse in der Aufnahme in und/oder entgegen einer durch das Steckkontaktgehäuse vorbestimmten Steckrichtung formschlüssig fixierbar. Eine solche formschlüssige Fixierung des Steckkontaktgehäuses kann z.B. durch Vorsprünge, Nuten oder Nasen gebildet sein, welche das Steckkontaktgehäuse gegen ein Verschieben in einer vorbestimmten Richtung sichern. Durch die vorgeschlagene Lösung kann sich das Steckkontaktgehäuse während eines Steckvorganges und/oder während eines Abziehvorganges eines Gegenkontaktes in bzw. an der Aufnahme abstützen, so dass der Steck- und/oder Abziehvorgang erleichtert wird, indem vermieden wird, dass das Steckkontaktgehäuse während des Steckvorgangs ausweicht oder beim Abziehen mitgezogen wird. Ferner kann dadurch vermieden werden, dass die Verbindung zwischen den elektrischen Leitungen und dem Steckkontaktgehäuse während des Steckvorganges und/oder Abziehvorganges belastet wird, sofern die Kontaktierung über ein bereits in der Aufnahme festgelegtes und mit den elektrischen Leitungen verbundenes Steckkontaktgehäuse erfolgt. Außerdem wird das Steckkontaktgehäuse dadurch in einer vorbestimmten Ausrichtung fixiert. Dadurch wird der Steckvorgang an sich vereinfacht, und die handhabende Person kann das Steckkontaktgehäuse mit den darin vorgesehenen Leitungen vereinfacht auffinden und mit dem Gegenkontakt kontaktieren kann.

Weiter wird vorgeschlagen, dass das Steckkontaktgehäuse in der Aufnahme in Bezug zu einer Drehbewegung um eine parallel zu den Längsachsen der elektrischen Leitungen ausgerichtete Drehachse formschlüssig fixiert ist. Durch die vorgeschlagene Weiterentwicklung ist das Steckkontaktgehäuse in Bezug zu den Längsachsen der elektrischen Leitungen gegen ein Verdrehen gesichert.

Die Kontaktierung kann konstruktiv besonders einfach verwirklicht werden, indem die Aufnahme in einer senkrecht zu einer vorbestimmten Steckrichtung des Steckkontaktgehäuses ausgerichteten Ebene eine unrunde, bevorzugt viereckige, besonders bevorzugt eine quadratische Formgebung aufweist. Durch die unrunde, viereckige oder sogar quadratische Formgebung der Aufnahme wird die Winkelausrichtung des in die Aufnahme einzuführenden Steckkontaktgehäuses vorgegeben, welche an die Ausrichtung der zu kontaktierenden elektrischen Kontakte angepasst ist. Sofern in der Aufnahme bereits ein Steckkontaktgehäuse gehaltert ist, wird durch die Formgebung der Aufnahme die Ausrichtung des Steckkontaktgehäuses vorgegeben. Ferner bildet die Aufnahme durch ihre Formgebung eine Abstützung für das Steckkontaktgehäuses, so dass es auch bei von außen einwirkenden Kräften in der vorbestimmten Ausrichtung fixiert ist.

Weiter wird vorgeschlagen, dass die Aufnahme eine die Anordnung und/oder Ausrichtung des Steckkontaktgehäuses definierende Formcodierung aufweist. Durch die Formcodierung der Aufnahme wird die vorbestimmte Anordnung und Ausrichtung des Steckkontaktgehäuses in der Aufnahme definiert. Das Steckkontaktgehäuses kann damit in ausschließlich einer vorbestimmten Anordnung bzw. Ausrichtung in der Aufnahme angeordnet und gehalten werden. Diese vorbestimmte Ausrichtung des Steckkontaktgehäuses kann z.B. für eine besonders günstige und möglichst entlastete Anordnung und Zuführung der elektrischen Leitungen in der elektrischen Blockiereinrichtung zu dem Steckkontaktgehäuse ausgelegt werden. Außerdem wird der montierenden Person aufgrund der Formcodierung nicht nur unmittelbar vermittelt, in welcher Position das Steckkontaktgehäuse montiert werden muss, es wird darüber hinaus auch vermieden, dass das Steckkontaktgehäuse in einer anderen falschen Ausrichtung montiert wird, da dies aufgrund der Formcodierung gar nicht möglich ist. Die Formcodierung kann z.B. durch eine einseitig vorstehende Nase, Nut oder Stufe verwirklicht sein.

Weiter wird vorgeschlagen, dass das Steckkontaktgehäuse aus der Aufnahme vorsteht und sich mit einer ersten Schulter an einem äußeren Rand der Aufnahme abstützt. Durch das Abstützen des Steckkontaktgehäuses werden die Steckkräfte bei der Kontaktierung über das Steckkontaktgehäuse in die Aufnahme weitergeleitet, so dass die elektrischen Leitungen in dem Steckkontaktgehäuses dabei, abgesehen von nicht zu vermeidenden Reibungskräften, nicht belastet werden.

Weiter wird vorgeschlagen, dass sich das Steckkontaktgehäuse an wenigstens einer der beiden einander zugewandten Randseiten der Teilaufnahmen über eine zweite Schulter abstützt. Durch die zweite Schulter wird die Einstecktiefe des Steckkontaktgehäuses in die jeweilige Teilaufnahme begrenzt. Ferner kann das Steckkontaktgehäuse dadurch verbessert in der Aufnahme zwischen den Teilaufnahmen verspannt werden.

Weiter wird vorgeschlagen, dass die beiden Teilaufnahmen durch eine Rastverbindung miteinander verbunden sind. Die Rastverbindung ist insofern von Vorteil, da sie ohne jegliches Werkzeug und sehr kostengünstig hergestellt werden kann, indem die Rastkanten und Rastarme einstückig an die Teilaufnahmen z.B. durch einen Kunststoffspritzvorgang angeformt werden.

Weiter wird vorgeschlagen, dass eine an der Gurtwelle oder an der Lagerkappe drehbar gelagerte Steuerscheibe vorgesehen ist, und die elektrisch betätigbare Blockiereinrichtung ein Gehäuse mit einer Grundplatte und einem hochstehenden ersten Schenkel, und einen schwenkbar in einem Schwenklager des hochstehenden ersten Schenkels gelagerten Blockierhebel mit einer Stahlplatte aufweist, und die elektrisch betätigbare Blockiereinrichtung die Steuerscheibe durch einen Eingriff des Blockierhebels in die Verzahnung der Steuerscheibe gegenüber der Gurtwelle (20) anhält und dadurch eine Blockierklinke zu einer Bewegung zwingt, in der sie zum Eingriff in eine fahrzeugfeste Verzahnung des Gurtaufrollers gelangt und die Gurtwelle in Auszugsrichtung blockiert. Das Auslösen der Blockierung der Gurtwelle durch ein Anhalten der Steuerscheibe und die dadurch erzwungene Bewegung der Blockierklinke hat sich in der Praxis seit langem bewährt, wobei die Steuerschiebe lediglich der Steuerung der Bewegung der Blockierklinke dient und die gesamten Kräfte zur Rückhaltung des Insassen über die in die fahrzeugfeste Verzahnung eingreifende Blockierklinke aufgenommen werden.

Weiter wird vorgeschlagen, dass der Blockierhebel einen von dem ersten Schenkel nach außen vorstehenden Hebelarm aufweist, an dem eine erste Feder angreift, welche den Blockierhebel in eine Stellung vorspannt, in welcher er mit einer an dem Ende eines Blockierarmes angeordneten Blockierspitze in die Verzahnung der Steuerscheibe eingreift. Durch die vorgeschlagene Lösung ist die Blockiereinrichtung so ausgebildet, dass sie in einem Ausgangszustand die Steuerscheibe blockiert und die Gurtwelle des Gurtaufrollers blockiert ist.

Weiter wird vorgeschlagen, dass die Blockiereinrichtung einen in dem Gehäuse angeordneten Elektromagneten aufweist, welcher durch eine Bestromung eine Kraft auf den Blockierhebel ausübt, durch welche er mit der Blockierspitze aus der Verzahnung der Steuerscheibe gezogen wird. Die elektrische Blockiereinrichtung ist damit so ausgebildet, dass sie bei einer Bestromung die Blockierung der Gurtwelle durch den Auszug des Blockierhebels aus der Verzahnung der Steuerscheibe freigibt und bei einer Unterbrechung der Bestromung automatisch blockiert. Dies ist z.B. im Fall eines Ausfalls der Stromversorgung wie z.B. in einem schweren Unfall von Vorteil, da der Insasse dadurch auch in diesem Fall durch den Sicherheitsgurt zurückgehalten wird.

Weiter wird vorgeschlagen, dass das Steckkontaktgehäuse formstabil ist und eine zu der Formgebung der Aufnahme formkorrespondierende unrunde Außenform aufweist. Sofern das Steckkontaktgehäuse bei der Montage im Fahrzeug erst eingeschoben wird, bietet die vorgeschlagene Lösung den Vorteil einer verbesserten verdrehgesicherten Einführbewegung des Steckkontaktgehäuses in die Aufnahme. Sofern das Steckkontaktgehäuse bereist in der Aufnahme des Gurtaufrollers angeordnet ist und die Kontaktierung des Gurtaufrollers über das Steckkontaktgehäuse erfolgt, bietet die vorgeschlagene Lösung den Vorteil, dass das Steckkontaktgehäuse dadurch in der Aufnahme in einer vorbestimmten Ausrichtung fixiert ist und sich in dieser Stellung in der Aufnahme abstützen kann.

Die Erfindung wird im Folgenden anhand einer bevorzugten Ausführungsform unter Bezugnahme auf die beigefügten Figuren erläutert. Dabei zeigt
- Fig. 1 bis 4: eine elektrische Blockiereinrichtung nach dem Stand der Technik und einen Gurtaufroller mit einer derartigen Blockiereinrichtung;
- Fig. 5 bis 11: eine weiterentwickelte Blockiereinrichtung mit einer Lagerkappe und einer Systemkappe eines erfindungsgemäßen Gurtaufrollers in verschiedenen Darstellungen.

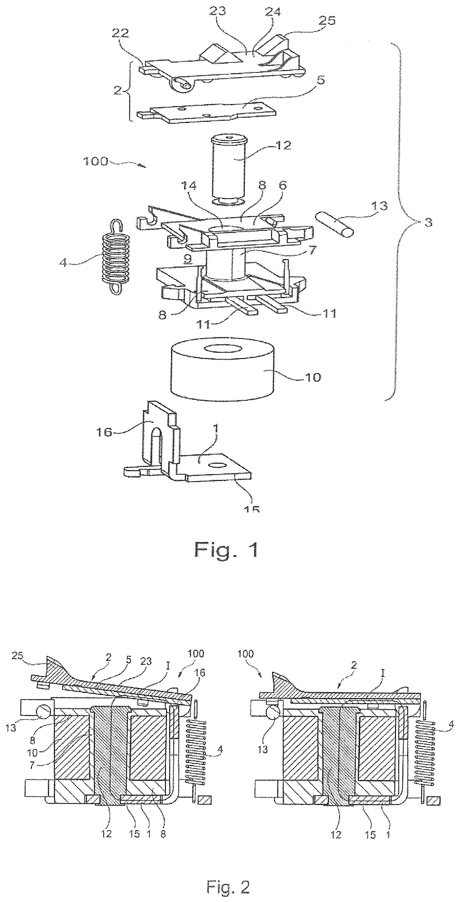

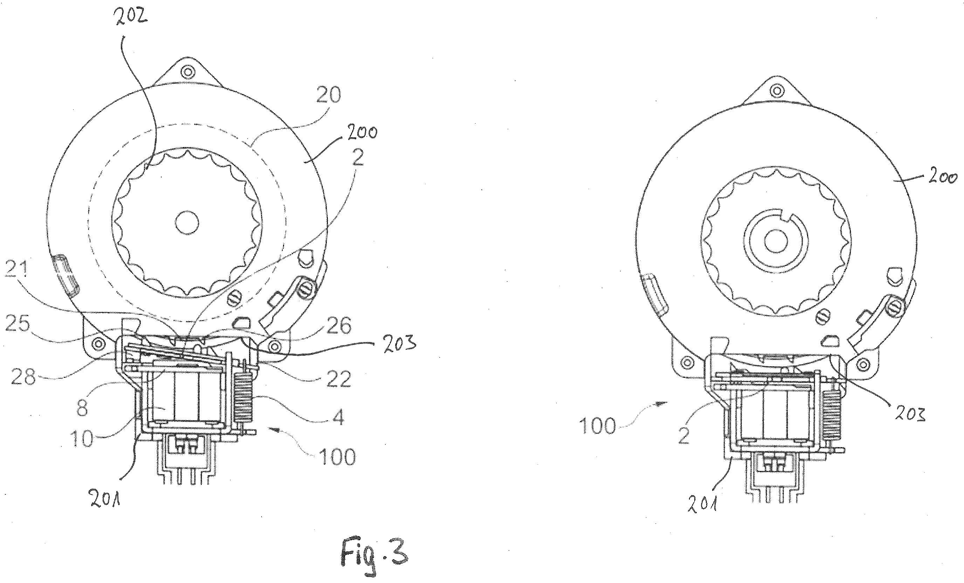

Eine von der Anmelderin in ihren Produkten verwendete elektrisch betätigbare Blockiereinrichtung 100, welche der Ausführungsform der GB 2 398 824 A entspricht, ist in den Figuren 1 und 2 gezeigt. Die elektrisch betätigbare Blockiereinrichtung 100 umfasst als Grundelemente ein Gehäuse 1 mit einem L-förmigen Grundaufbau mit einer Grundplatte 15 und einem ersten hochstehenden Schenkel 16, einen an dem ersten hochstehenden Schenkel 16 des Gehäuses 1 schwenkbar gelagerten Blockierhebel 2, einen Elektromagneten 3 und eine erste Feder 4, welche mit einem Ende an dem Gehäuse 1 gehalten ist und mit dem anderen Ende mit einem von dem ersten hochstehenden Schenkel 16 nach außen vorstehenden Hebelarm 22 des Blockierhebels 2 verbunden ist. Die erste Feder 4 ist als Zugfeder so ausgelegt, so dass sie den Blockierhebel 2 in eine Stellung vorspannt, in welcher dieser mit einer Blockierspitze 25 in eine Verzahnung 26 einer Steuerscheibe 21 eingreift und dadurch die Steuerscheibe 21 gegenüber der Gurtwelle 20 zurückhält. Die Steuerscheibe 21 mit der Verzahnung 26 ist nur in der Figur 3 in einem Gurtaufroller nach dem Stand der Technik zu erkennen. Damit wird die Blockierklinke bei einer Drehung der Gurtwelle 20 in Auszugsrichtung automatisch zu einer Einsteuerbewegung in eine fahrzeugfeste Verzahnung gezwungen, und die Gurtwelle 20 ist nachfolgend gegen einen weiteren Gurtbandauszug blockiert. Der Blockierhebel 2 umfasst ein Konturteil 24 und eine Stahlplatte 5, wobei die Stahlplatte 5 dem Elektromagneten 3 zugewandt ist, so dass der Blockierhebel 2 bei einer Bestromung des Elektromagneten 3 von diesem angezogen und damit aus der Verzahnung 26 der Steuerscheibe 21 herausgezogen wird. Damit ist die Gurtwelle 20 nachfolgend in Aus- und Einzugsrichtung frei drehbar. Der Vorteil dieser Lösung ist darin zu sehen, dass die Gurtwelle 20 auch bei einem Stromausfall oder einem Defekt des Elektromagneten 3 in Auszugsrichtung blockiert ist, und der Insasse wird auch in diesem Fall sicher zurückgehalten.

Der Elektromagnet 3 umfasst ein Grundbauteil 6 mit einem säulenförmigen Mittenabschnitt 7 und zwei Radialflansche 8, von denen jeweils einer an einem der Enden des Mittenabschnittes 7 radial nach außen vorsteht. Der Elektromagnet 3 ist mit dem Grundbauteil 6 auf der Grundplatte 15 des Gehäuses 1 gehalten. Das Grundbauteil 6 weist einen rohrförmigen Durchgangsabschnitt 14 in dem Mittenabschnitt 7 und einen ringförmigen Zwischenraum 9 radial außen an dem Mittenabschnitt 7 auf, wobei der ringförmige Zwischenraum 9 zu den Enden das Mittenabschnittes 7 hin durch die Radialflansche 8 begrenzt ist. Ferner umfasst der Elektromagnet 3 eine Spule 10 mit einer Vielzahl von Windungen, welche in dem ringförmigen Zwischenraum 9 angeordnet ist und über in dem Grundbauteil 6 vorgesehene Leitungen 11 mit einer externen Steuereinrichtung elektrisch kontaktiert ist. Außerdem umfasst der Elektromagnet 3 einen ersten Eisenkern 12, der in dem rohrförmigen Durchgangsabschnitt 14 des Grundbauteils 6 angeordnet und mit einem freien Ende der Stahlplatte 5 des Blockierhebels 2 zugewandt ist.

Bei einer Bestromung der Spule 10 wird der Blockierhebel 2 angezogen, indem er einen ersten magnetischen Kreis I, definiert durch den ersten hochstehenden Schenkel 16 des Gehäuses 1, den ersten Eisenkern 12 und die Abschnitte des Blockierhebels 2 und der Grundplatte 15 zwischen dem ersten Eisenkern 12 und dem ersten hochstehenden Schenkel 16 schließt, wie in der rechten Darstellung der Figur 2 zu erkennen ist. Ferner ist ein Dämpfungselement 13 in Form eines in sich weichen Rohres z.B. in Form eines kurzen Schlauchstückes vorgesehen, welches an seinen Enden zwischen zwei Fortsätzen des dem Blockierhebels 2 zugewandten Radialflansches 8 eingespannt ist. Das Dämpfungselement 13 ist so positioniert, dass der Blockierhebel 2 mit seinem freien Ende in der ausgelenkten Stellung nicht an dem Dämpfungselement 13 anliegt (linke Darstellung der Figur 2) und erst in der angezogenen Stellung an dem mittigen weichen Abschnitt des Dämpfungselementes 13 zwischen den Einspannstellen zur Anlage gelangt (rechte Darstellung der Figur 2). Dadurch wird die Anzugsbewegung des Blockierhebels 2 in der Endphase der Bewegung abgedämpft. Durch diese Dämpfung wird ein weicher Anschlag realisiert, und es werden störende "Klappergeräusche" bei der Anzugsbewegung und möglichen nachfolgenden geringfügigen Bewegungen des Blockierhebels 2 vermieden.

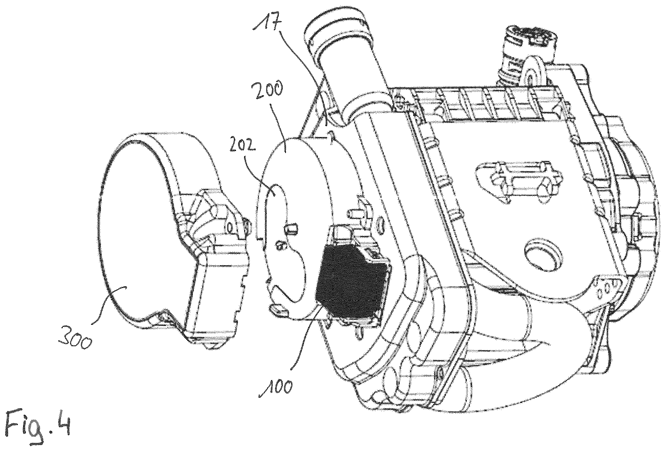

Die Blockiereinrichtung 100 ist in einer Halterung 201 einer Lagerkappe 200 befestigt, an welcher die Steuerscheibe 21 und/oder die Gurtwelle 20 gelagert sein können. Die Lagerkappe 200 selbst ist an einem Rahmen 17 des Gurtaufroller gehalten, wie in der Figur 4 zu erkennen ist. Ferner kann die Lagerkappe 200 an ihrer Außenseite eine Kontur 202 in Form einer Verzahnung oder Lagerstruktur für ein Zahnradgetriebe für eine ELR/ALR Umschalteinrichtung aufweisen. Ferner weist die Lagerkappe 200 eine Ausnehmung 203 auf, durch welche die in der Lagerkappe 200 angeordnete Steuerscheibe 21 zur Außenseite hin freigelegt ist, so dass der Blockierhebel 2 mit seiner Blockierspitze 25 von außen in die Verzahnung 26 der Steuerscheibe 21 einsteuern kann.

Die Lagerkappe 200 ist zur Außenseite hin durch eine in der Figur 4 zu erkennende Systemkappe 300 abgedeckt, welche ihrerseits unmittelbar an den Rahmen 17 oder mittelbar über die Lagerkappe 200 an dem Rahmen 17 befestigt ist. Die Systemkappe 300 deckt damit Lagerkappe 200 und die daran gehaltene Blockiereinrichtung 100 zur Außenseite hin ab und bildet einen Schutz der Blockiereinrichtung 100 und der weiteren Teile an der Lagerkappe 200 vor äußeren mechanischen Einflüssen.

Die elektrisch betätigbare Blockiereinrichtung 100 ist hier anhand eines Ausführungsbeispieles gezeigt, bei dem der Blockierhebel 2 in Eingriffsstellung federvorgespannt ist. Die elektrisch betätigbare Blockiereinrichtung 100 kann aber ebenso so ausgebildet sein, dass der Blockierhebel entgegen der Eingriffsrichtung federvorgespannt ist und erst durch eine Bestromung des Elektromagneten 10 und die dadurch wirkende Magnetkraft zu einer Eingriffsbewegung in die Verzahnung 26 angetrieben wird. Ferner kann auch eine elektrisch betätigbare Blockiereinrichtung 100 verwendet werden, welche die Blockierung der Gurtwelle 20 bei einer Bestromung oder Stromunterbrechung durch eine anders ausgebildete mechanische Blockiereinrichtung auslöst. Wichtig für die Erfindung ist lediglich, dass die elektrisch betätigbare Blockiereinrichtung elektrische Leitung 11 aufweist, welche bei der Montage des Gurtaufrollers oder bei der Montage des Gurtaufrollers im Fahrzeug kontaktiert werden müssen.

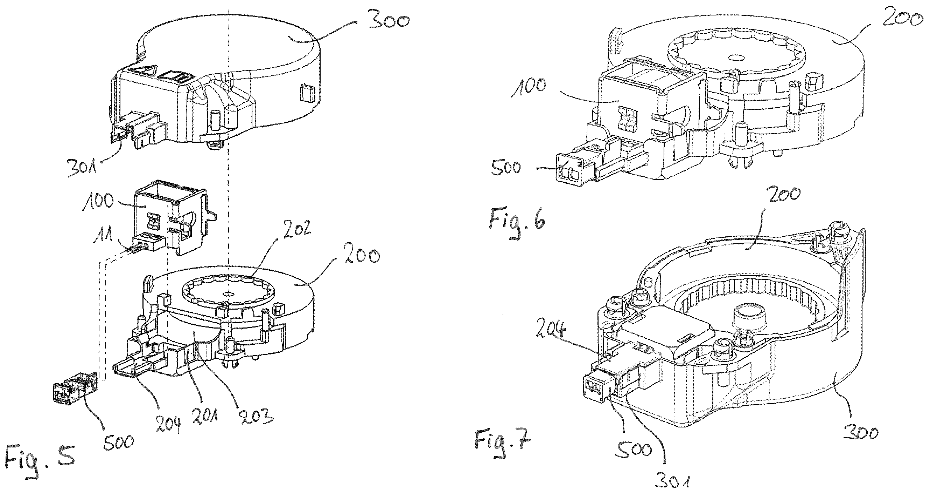

In den Figuren 5 bis 7 sind eine neue Lagerkappe 200, eine neue Systemkappe 300 und eine weiterentwickelte elektrische Blockiereinrichtung 100 eines weiterentwickelten Gurtaufrollers dargestellt. Der erfindungsgemäße Gurtaufroller wird gebildet, indem die Lagerkappe 200, die Systemkappe 300 und die elektrische Blockiereinrichtung 100 in dem Gurtaufroller, welcher in den Figuren 3 und 4 gezeigt ist, gegen eine Lagerkappe 200, eine Systemkappe 300 und eine elektrische Blockiereinrichtung 100, wie sie in den Figuren 5 bis 7 ausgetauscht werden. Ansonsten können die Bauteile, insbesondere der Rahmen 17 mit seinen Befestigungsstellen, des Gurtaufrollers unverändert sein.

Die elektrische Blockiereinrichtung 100, die Lagerkappe 200 und die Systemkappe 300 der Figuren 5 bis 7 entsprechen in ihrem Grundaufbau der in den Figuren 1 bis 4 gezeigten elektrischen Blockiereinrichtung 100, der Lagerkappe 200 und der Systemkappe 300, wobei nachfolgend die Lagerkappe 200, die Systemkappe 300 und die Blockiereinrichtung 100 der Figuren 5 bis 7 beschrieben wird. Die Lagerkappe 200 weist eine Halterung 201 auf, in welcher die elektrische Blockiereinrichtung 100 gehaltert ist. Die Halterung 201 ist zu ihrer Radialaußenseite hin zu einer Teilaufnahme 204 erweitert. Die Systemkappe 300 weist ebenfalls eine sich radial nach außen erstreckende Teilaufnahme 301 auf. Ferner ist ein Steckkontaktgehäuse 500 vorgesehen, welches auf die freien elektrischen Leitungen 11 der Blockiereinrichtung 100 aufgesetzt und z.B. in einen Crimpvorgang mit diesen verbunden ist.

Die Systemkappe 300 und die Lagerkappe 200 bilden zusammen in der montierten Stellung in dem Zwischenraum zwischen der Teilaufnahme 301 der Systemkappe 300 und der Teilaufnahme 204 der Lagerkappe 200 eine Aufnahme 400 aus, in der das Steckkontaktgehäuse 500 gehalten ist. Zur Montage wird das Steckkontaktgehäuse 500 auf die elektrischen Leitungen 11 der elektrischen Blockiereinrichtung 100 aufgesetzt. Anschließend wird die Blockiereinrichtung 100 in die Halterung 201 der Lagerkappe 200 und das über die elektrischen Leitungen 11 daran gehaltene Steckkontaktgehäuse 500 in die Teilaufnahme 204 eingesetzt. Alternativ kann das Steckkontaktgehäuse 500 auch auf die elektrischen Leitungen 11 aufgesetzt werden, nachdem die elektrische Blockiereinrichtung 100 bereits in die Halterung 201 eingesetzt wurde. Anschließend wird die Systemkappe 300 aufgesetzt, wodurch die freie Seite des Steckkontaktgehäuse 500 abgedeckt wird und die Teilaufnahme 204 der Lagerkappe 200 durch die Teilaufnahme 301 der Systemkappe 300 zur der Aufnahme 400 vervollständigt wird. Ferner kann das Steckkontaktgehäuse 500 auch nach dem Zusammensetzen der Systemkappe 300 und der Lagerkappe 200 zum Beispiel bei der Montage des Gurtaufrollers im Fahrzeug von außen in die Aufnahme 400 eingeführt werden.

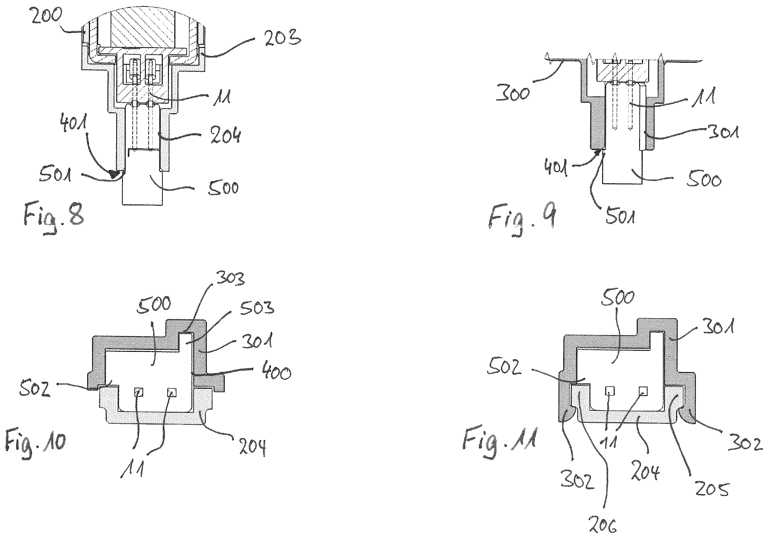

In der Figur 8 ist ein Ausschnitt der Lagerkappe 200 in Sicht auf das in der Teilaufnahme 204 angeordnete Steckkontaktgehäuse 500 zu erkennen. Das Steckkontaktgehäuse 500 ist so geformt, dass es stirnseitig aus der Teilaufnahme 204 herausragt. In der Figur 9 ist ein Ausschnitt der Systemkappe 300 in Sicht auf das in der Teilaufnahme 301 angeordnete Stecckontaktgehäuse 500 zu erkennen. Das Steckkontaktgehäuse 500 ist so geformt, dass es stirnseitig aus der Teilaufnahme 301 herausragt. Ferner ist das Steckkontaktgehäuse 500 so geformt, dass es die vorderen Ränder der Teilaufnahmen 204 und 301 und damit den vorderen Rand 401 der zusammengesetzten Aufnahme 400 mit einer ersten Schulter 501 überdeckt.

In den Figuren 10 und 11 ist das Steckkontaktgehäuse 500 in der Aufnahme 400 in zwei verschiedenen Schnittebenen senkrecht zu den elektrischen Leitungen 11 zu erkennen. Die Teilaufnahmen 204 und 301 sind jeweils im Querschnitt U-förmig mit einer Grundplatte und zwei seitlich hochstehenden und parallel zueinander ausgerichteten Seitenwänden ausgebildet. Die Teilaufnahmen 204 und 301 ergänzen sich in der zusammengesetzten Stellung der Systemkappe 300 und der Lagerkappe 200 zu einer im Querschnitt unrunden, bevorzugt in etwa rechteckförmigen oder sogar quadratischen Aufnahme 400, in der das Steckkontaktgehäuse 500 in Bezug zu seiner Längsachse bzw. der Längsachsen der elektrischen Leitungen 11 drehfest festgelegt ist. Ferner weist die Teilaufnahme 301 der Systemkappe 300 eine einseitig angeordnete Nut 302 auf, welche eine zu einer hochstehenden Nase 503 des Stecckontaktgehäuses 500 korrespondierende Formgebung aufweist. Die Nut 303 der Teilaufnahme 301 und die Nase 503 des Steckkontaktgehäuses 500 bilden zusammen eine Formcodierung, welche die Anordnung des Steckkontaktgehäuses 500 in ausschließlich einer Position und Ausrichtung in der Aufnahme 400 ermöglicht bzw. definiert. Ferner weist das Stecckontaktgehäuse 500 eine zweite Schulter 502 auf, mit der es auf der Randseite der Teilaufnahme 204 aufliegt, welche der Teilaufnahme 301 der Systemkappe 300 zugewandt ist. Ferner sind die beiden hochstehenden Seitenwände der Teilaufnahme 204 zu verdickten Vorsprüngen 205 und 206 zur Ausbildung von Rastkanten geformt. Die hochstehenden Seitenwände der Teilaufnahme 301 der Systemkappe 300 sind als Rastarme mit entsprechenden Rastkanten ausgebildet. Zur Herstellung der Verbindung der Systemkappe 300 mit der Lagerkappe 200 werden die Rastarme 302 durch Verrasten hinter den Rastkanten der Vorsprünge 205 und 206 formschlüssig fixiert, wie in der Figur 11 zu erkennen ist. Dabei wird das Steckkontaktgehäuse 500 in der Aufnahme 400 festgelegt. Ferner stützt sich das Stecckontaktgehäuse 500 über die zweite Schulter 502 an der oberen Randseite der Teilaufnahme 204 ab.

Das Steckkontaktgehäuse 500 ist in den darin gehaltenen elektrischen Leitungen 11 in der Aufnahme 400 formschlüssig festgelegt, indem es selbst eine zu der Querschnittsformgebung der unrunden Aufnahme 400 formkorrespondierende Querschnittsformgebung aufweist und darüber in Bezug zu seiner Längsachse drehfest in der Aufnahme 400 fixiert ist. Ferner stützt sich das Steckkontaktgehäuse 500 während des Steckvorganges eines externen Steckkontaktes über die erste Schulter 501 an dem stirnseitigen Rand 401 der Aufnahme 400 ab, so dass die Verbindungsstellen zwischen dem Steckkontaktgehäuse 500 und den elektrischen Leitungen 11 dabei nicht belastet werden. In gleicher Weise kann zusätzlich eine formschlüssige Verbindung des Steckkontaktgehäuses 500 in der Aufnahme 400 entgegen der Steckrichtung also in Abzugsrichtung des externen Steckkontaktes vorgesehen sein.

Durch das zusätzlich vorgesehene Steckkontaktgehäuse 500 und dessen Festlegung in der Aufnahme 400 wird die Kontaktierung also die Montage des Gurtaufrollers selbst und die Montage des Gurtaufrollers im Fahrzeug vereinfacht. Ferner wird die Kontaktierung darüber hinaus verbessert, da die elektrischen Leitungen 11 bei der Herstellung des Kontaktes nicht mehr belastet werden. Außerdem wird die Kontaktstelle der elektrischen Leitungen 11 grundsätzlich über das in der Aufnahme 400 festgelegte Steckkontaktgehäuse 500 entlastet, da sich das Steckkontaktgehäuse 500 in der Aufnahme 400 abstützt und alle Reaktionskräfte in der Aufnahme 400 wirken.

## Patentansprüche

1. Gurtaufroller mit
- einer drehbar gelagerten Gurtwelle (20) und
und
- einer elektrisch betätigbaren Blockiereinrichtung (100) welche bei einer Betätigung eine Blockierung der Gurtwelle (20) in Auszugsrichtung mittelbar oder unmittelbar bewirkt, und
- einer elektrischen Leitung (11) zur Kontaktierung der Blockiereinrichtung mit einer externen Stromversorgung und/oder Steuereinrichtung, wobei
- eine Systemkappe (300) und eine Lagerkappe (200) vorgesehen sind, und
- die Lagerkappe (200) eine Halterung (201) für die elektrische Blockiereinrichtung (100) aufweist, und
- die Systemkappe (300) die Lagerkappe (200) und die daran gehaltene elektrische Blockiereinrichtung (100) in der montierten Stellung zur Außenseite hin abdeckt, **dadurch gekennzeichnet, dass**
- die Systemkappe (300) und die Lagerkappe (200) jeweils eine Teilaufnahme (301,204) aufweisen, welche sich in der montierten Stellung der Systemkappe (300) und der Lagerkappe (200) zu einer Aufnahme (400) für ein Steckkontaktgehäuse ergänzen.

2. Gurtaufroller nach Anspruch 1, **dadurch gekennzeichnet, dass**
- das Steckkontaktgehäuse (500) in der Aufnahme (400) in und/oder entgegen einer durch das Steckkontaktgehäuse (500) vorbestimmten Steckrichtung formschlüssig fixierbar ist.

3. Gurtaufroller nach Anspruch 1 oder 2, **dadurch gekennzeichnet, dass**
- das Steckkontaktgehäuse (500) in der Aufnahme (400) in Bezug zu einer Drehbewegung um eine parallel zu den Längsachsen der elektrischen Leitungen (11) ausgerichtete Drehachse formschlüssig fixierbar ist.

4. Gurtaufroller nach Anspruch 3, **dadurch gekennzeichnet, dass**
- die Aufnahme (400) in einer senkrecht zu einer vorbestimmten Steckrichtung des Steckkontaktgehäuses (500) ausgerichteten Ebene eine unrunde, bevorzugt viereckige, besonders bevorzugt eine quadratische Formgebung aufweist.

5. Gurtaufroller nach einem der Ansprüche 1 bis 4, **dadurch gekennzeichnet, dass** die Aufnahme (400) eine die Anordnung und/oder Ausrichtung des Steckkontaktgehäuses (500) definierende Formcodierung aufweist.

6. Gurtaufroller nach einem der Ansprüche 1 bis 5, **dadurch gekennzeichnet, dass**
- das Steckkontaktgehäuse (500) aus der Aufnahme (400) vorsteht und sich mit einer ersten Schulter (501) an einem äußeren Rand (401) der Aufnahme (400) abstützt.

7. Gurtaufroller nach einem der Ansprüche 1 bis 6, **dadurch gekennzeichnet, dass**
- sich das Steckkontaktgehäuse (500) an wenigstens einer der beiden einander zugewandten Randseiten der Teilaufnahmen (301,204) über eine zweite Schulter (502) abstützt.

8. Gurtaufroller nach einem der Ansprüche 1 bis 7, **dadurch gekennzeichnet, dass**
- die beiden Teilaufnahmen (301,204) durch eine Rastverbindung miteinander verbunden sind.

9. Gurtaufroller nach einem der Ansprüche 1 bis 8, **dadurch gekennzeichnet, dass**
- eine an der Gurtwelle (20) oder an der Lagerkappe (200) drehbar gelagerte Steuerscheibe (21) vorgesehen ist, und
- die elektrisch betätigbare Blockiereinrichtung (100) ein Gehäuse (1) mit einer Grundplatte (15) und einem hochstehenden ersten Schenkel (16), und
- einen schwenkbar in einem Schwenklager des hochstehenden ersten Schenkel (16) gelagerten Blockierhebel (2) mit einer Stahlplatte (5) aufweist, und
- die elektrisch betätigbare Blockiereinrichtung (100) die Steuerscheibe (21) durch einen Eingriff des Blockierhebels (2) in die Verzahnung die Steuerscheibe (21) gegenüber der Gurtwelle (20) anhält und dadurch eine Blockierklinke zu einer Bewegung zwingt, in der sie zum Eingriff in eine fahrzeugfeste Verzahnung des Gurtaufrollers gelangt und die Gurtwelle (20) in Auszugsrichtung blockiert.

10. Gurtraufroller nach Anspruch 9, **dadurch gekennzeichnet, dass**
- der Blockierhebel (2) einen von dem ersten Schenkel (16) nach außen vorstehenden Hebelarm (22) aufweist, an dem eine erste Feder (4) angreift, welche den Blockierhebel (2) in eine Stellung vorspannt, in welcher er mit einer an dem Ende eines Blockierarmes (23) angeordneten Blockierspitze (25) in die Verzahnung (26) der Steuerscheibe (21) eingreift.

11. Gurtaufroller nach Anspruch 10, **dadurch gekennzeichnet, dass**
- die Blockiereinrichtung (100) einen in dem Gehäuse (1) angeordneten Elektromagneten (3) aufweist, welcher durch eine Bestromung eine Kraft auf den Blockierhebel (2) ausübt, durch welche er mit der Blockierspitze (25) aus der Verzahnung (26) der Steuerscheibe (21) gezogen wird.

12. Gurtaufroller nach einem der Ansprüche 1 bis 11, **dadurch gekennzeichnet, dass**
- das Steckkontaktgehäuse (500) formstabil ist und eine zu der Formgebung der Aufnahme (400) formkorrespondierende unrunde Außenform aufweist

## Claims

1. Belt retractor, comprising
- a rotatably mounted belt shaft (20) and
and
- an electrically actuatable blocking device (100) which indirectly or directly brings about blocking of the belt shaft (20) in the pull-out direction upon being actuated, and
- an electrical line (11) for bringing the blocking device into contact with an external power supply and/or control device,
- a system cap (300) and a bearing cap (200) being provided, and
- the bearing cap (200) having a holder (201) for the electrical blocking device (100), and
- the system cap (300) covering the bearing cap (200) and the electrical blocking device (100) held thereon from the outside in the installed position,
**characterized in that**
- the system cap (300) and the bearing cap (200) each comprise a partial receptacle (301,204) which, in the installed position of the system cap (300) and the bearing cap (200), complement each other in order to form a receptacle (400) for a plug contact housing.

2. Belt retractor according to claim 1, **characterized in that**
- the plug contact housing (500) can be form-fittingly fixed in the receptacle (400) in and/or counter to a plug-in direction predetermined by the plug-in contact housing (500).

3. Belt retractor according to either claim 1 or claim 2, **characterized in that**
- the plug contact housing (500) can be form-fittingly fixed in the receptacle (400) in relation to a rotational movement about an axis of rotation oriented in parallel with the longitudinal axes of the electrical lines (11).

4. Belt retractor according to claim 3, **characterized in that**
- the receptacle (400) has a non-circular, preferably quadrilateral, particularly preferably square shape in a plane oriented perpendicularly to a predetermined plug-in direction of the plug contact housing (500).

5. Belt retractor according to any of claims 1 to 4, **characterized in that**
the receptacle (400) has a shape coding defining the arrangement and/or orientation of the plug contact housing (500).

6. Belt retractor according to any of claims 1 to 5, **characterized in that**
- the plug contact housing (500) projects from the receptacle (400) and is supported by a first shoulder (501) on an outer edge (401) of the receptacle (400).

7. Belt retractor according to any of claims 1 to 6, **characterized in that**
- the plug contact housing (500) is supported on at least one of the two mutually facing edge faces of the partial receptacles (301,204) via a second shoulder (502).

8. Belt retractor according to any of claims 1 to 7, **characterized in that**
- the two partial receptacles (301,204) are connected to each other by a latching connection.

9. Belt retractor according to any of claims 1 to 8, **characterized in that**
- a disk cam (21) rotatably mounted on the belt shaft (20) or on the bearing cap (200) is provided, and
- the electrically actuatable blocking device (100) comprises a housing (1) having a base plate (15) and an upright first limb (16), and
- comprises a blocking lever (2) which is pivotably mounted in a pivot bearing of the upright first limb (16) and has a steel plate (5), and
- the electrically actuatable blocking device (100) stops the disk cam (21) in relation to the belt shaft (20) by means of an engagement of the blocking lever (2) in the toothing the disk cam (21) and thereby forces a blocking pawl into a movement in which it comes to engage in a toothing, fixed to the vehicle, of the belt retractor and blocks the belt shaft (20) in the pull-out direction.

10. Belt retractor according to claim 9, **characterized in that**
- the blocking lever (2) comprises a lever arm (22) which projects outward from the first limb (16) and on which a first spring (4) acts, which spring preloads the blocking lever (2) into a position in which it engages in the toothing (26) of the disk cam (21) by means of a blocking tip (25) arranged at the end of a blocking arm (23).

11. Belt retractor according to claim 10, **characterized in that**
- the blocking device (100) comprises an electromagnet (3) arranged in the housing (1), which exerts a force on the blocking lever (2) by energization, by means of which force said blocking lever is pulled out of the toothing (26) of the disk cam (21) together with the blocking tip (25).

12. Belt retractor according to any of claims 1 to 11, **characterized in that**
- the plug contact housing (500) is dimensionally stable and has a non-circular outer shape corresponding to the shape of the receptacle (400).

## Revendications

1. Enrouleur de ceinture comportant
- un arbre de ceinture (20) monté de manière à pouvoir tourner
et
- un dispositif de blocage (100) pouvant être actionné électriquement qui, lors d'un actionnement, provoque directement ou indirectement un blocage de l'arbre de ceinture (20) dans le sens d'extraction, et
- une ligne électrique (11) pour la mise en contact du dispositif de blocage avec une alimentation électrique externe et/ou un dispositif de commande, dans lequel
- un capuchon de système (300) et un capuchon de palier (200) sont prévus, et
- le capuchon de palier (200) présente un support (201) pour le dispositif de blocage électrique (100), et
- le capuchon de système (300) recouvre le capuchon de palier (200) et le dispositif de blocage électrique (100) maintenu sur celui-ci dans la position montée vers le côté extérieur, **caractérisé en ce que**
- le capuchon de système (300) et le capuchon de palier (200) présentent respectivement un logement partiel (301, 204) qui, dans la position montée du capuchon de système (300) et du capuchon de palier (200), se complètent pour former un logement (400) pour un boîtier de contact enfichable.

2. Enrouleur de ceinture selon la revendication 1, **caractérisé en ce que**
- le boîtier de contact enfichable (500) peut être fixé par complémentarité de forme dans le logement (400) dans un sens d'enfichage prédéterminé par le boîtier de contact enfichable (500) et/ou à l'encontre de celui-ci.

3. Enrouleur de ceinture selon la revendication 1 ou 2, **caractérisé en ce que**
- le boîtier de contact enfichable (500) peut être fixé par complémentarité de forme dans le logement (400) par rapport à un mouvement de rotation autour d'un axe de rotation orienté parallèlement aux axes longitudinaux des lignes électriques (11).

4. Enrouleur de ceinture selon la revendication 3, **caractérisé en ce que**
- le logement (400) présente, dans un plan orienté perpendiculairement à un sens d'enfichage prédéterminé du boîtier de contact enfichable (500), une forme non ronde, de préférence quadrangulaire, de manière particulièrement préférée une forme carrée.

5. Enrouleur de ceinture selon l'une des revendications 1 à 4,
**caractérisé en ce que**
le logement (400) présente un codage de forme définissant la disposition et/ou l'orientation du boîtier de contact enfichable (500).

6. Enrouleur de ceinture selon l'une des revendications 1 à 5,
**caractérisé en ce que**
- le boîtier de contact enfichable (500) dépasse du logement (400) et s'appuie avec un premier épaulement (501) sur un bord extérieur (401) du logement (400).

7. Enrouleur de ceinture selon l'une des revendications 1 à 6,
**caractérisé en ce que**
- le boîtier de contact enfichable (500) s'appuie sur au moins l'un des deux côtés de bord tournés l'un vers l'autre des logements partiels (301, 204) par l'intermédiaire d'un second épaulement (502).

8. Enrouleur de ceinture selon l'une des revendications 1 à 7,
**caractérisé en ce que**
- les deux logements partiels (301, 204) sont reliés entre eux par une liaison par encliquetage.

9. Enrouleur de ceinture selon l'une des revendications 1 à 8,
**caractérisé en ce que**
- un disque de commande (21) monté de manière à pouvoir tourner sur l'arbre de ceinture (20) ou sur le capuchon de palier (200) est prévu, et
- le dispositif de blocage (100) pouvant être actionné électriquement présente un boîtier (1) comportant une plaque de base (15) et une première branche (16) surélevée, et
- un levier de blocage (2) monté de manière à pouvoir pivoter dans un palier de pivotement de la première branche (16) surélevée et comportant une plaque en acier (5), et
- le dispositif de blocage (100) pouvant être actionné électriquement maintient le disque de commande (21) à l'encontre de l'arbre de ceinture par une mise en prise du levier de blocage (2) dans la denture du disque de blocage (21), et contraint ainsi un loquet de blocage à un mouvement dans lequel il vient en prise dans une denture solidaire du véhicule de l'enrouleur de ceinture et bloque l'arbre de ceinture (20) dans le sens d'extraction.

10. Enrouleur de ceinture selon la revendication 9, **caractérisé en ce que**
- le levier de blocage (2) présente un bras de levier (22) faisant saillie vers l'extérieur à partir de la première branche (16), sur lequel un premier ressort (4) agit, lequel premier ressort précontraint le levier de blocage (2) dans la position dans laquelle il vient en prise dans la denture (26) du disque de commande (21) avec une pointe de blocage (25) disposée à l'extrémité d'un bras de blocage (23).

11. Enrouleur de ceinture selon la revendication 10, **caractérisé en ce que**
- le dispositif de blocage (100) présente un électroaimant (3) disposé dans le boîtier (1), lequel électroaimant exerce une force sur le levier de blocage (2) au moyen d'une alimentation électrique, par laquelle force il est tiré avec la pointe de blocage (25) hors de la denture (26) du disque de commande (21).

12. Enrouleur de ceinture selon l'une des revendications 1 à 11,
**caractérisé en ce que**
- le boîtier de contact enfichable (500) est indéformable et présente une forme extérieure non ronde correspondant à la forme du logement (400).
